# EUROPEAN PATENT SPECIFICATION

(11) **EP 3 340 000 B1**
(45) Date of publication and mention of the grant of the patent: **14.10.2020**
(21) Application number: 17208672.0
(22) Date of filing: 19.12.2017
(51) Int. Cl.: G05D 1/00, B60W 30/165, B60W 50/00

(54) **SYSTEM FOR SIMULTANEOUS DRIVING**
SIMULTANES FAHRSYSTEM
SYSTÈME POUR CONDUITE SIMULTANÉE

(30) Priority: 19.12.2016 IT 201600128143
(43) Date of publication of application: 27.06.2018
(73) Proprietor: IVECO FRANCE S.A.S., 69200 Vénissieux (FR)
(72) Inventor: GENDRE, Guy, 69003 LYON (FR); SOLIGNAC, Clement, 69370 SAINT DIDIER AU MONT D'OR (FR)
(74) Representative: Bongiovanni, Simone

(56) References cited:
- DE-A1- 3 404 202
- US-A- 5 572 449
- US-A1- 2005 060 066

## Description

This invention relates to an automatic vehicle driving system, particularly an automatic driving system for at least two vehicles positioned one behind the other.

Automatic vehicle driving systems are being increasingly investigated due to innovations in the field of information technology.

These systems can drive vehicles through the information they acquire via a plurality of sensors, such as cameras, or distance sensors placed on the vehicles.

These systems aim to reduce driver activity in order to increase the reliability of driving and to reduce driver costs.

However, current standards require the presence of a driver in the vehicle, even when the vehicle is being driven automatically. The automatically driven vehicle must
to be controlled manually, in the case of an accident or failure of the automatic driving system.

As a result, two or more vehicles, positioned one behind the other, require the presence of a driver in each of the vehicles.

Examples of known automatic driving systems are disclosed in documents US 2005/060066 A1 or US5572449 A.

Automatic driving systems therefore still require improvements to reduce costs and increase their driving reliability.

The invention aims to solve the aforementioned drawbacks.

The above mentioned objectives are achieved by an automatic driving system according to claim 1.

Other features and advantages of the invention will appear clearly from the description below, which is given by way of a non-limiting example only, with reference to the accompanying drawings, in which:
- Figure 1 is a diagram illustrating an automatic driving system according to the state of the art; and
- Figure 2 is a diagram illustrating an automatic driving system according to the present invention.

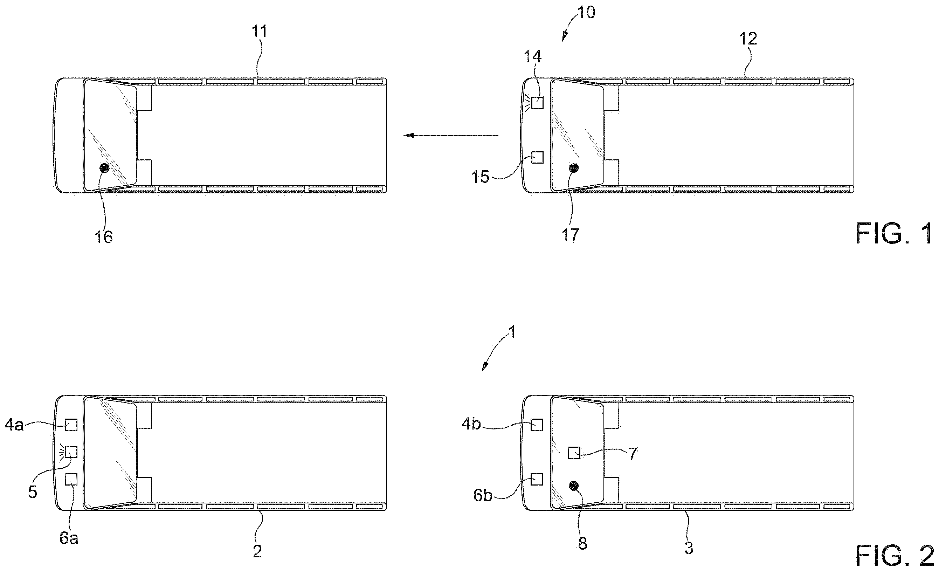

Figure 1 shows an automatic driving system 10 according to the state of the art.

The system 10 comprises a first vehicle 11 and a second vehicle 12 that follows the first vehicle 11. The second vehicle 12 is driven automatically based on movement information from the first vehicle 11.

The automatic driving is of a known type. For example, the second vehicle comprises acquisition means 14 configured to acquire movement information from the first vehicle 11 and automatic driving means 15 configured to automatically drive the second vehicle 12 based on the information acquired by the acquisition means 14.

The system 10 however requires two drivers, a first driver 16 in the first vehicle that drives the vehicle manually, and a second driver 17 that is positioned in the second vehicle and can intervene, if problems with the automatic driving means occur.

An automatic driving system 1 according to the present invention is illustrated in Figure 2.

Advantageously, the system 1 comprises a first vehicle 2 and a second vehicle 3 which follows the first vehicle 2, the first vehicle 2 is manually driven remotely by a driver who is positioned in the second vehicle 3, which in turn follows the first vehicle 2 which is driven automatically based on the movements of the first vehicle 2, as described in more detail below.

The first vehicle 2 and the second vehicle 3 both comprise telecommunication means 4a and 4b, configured to communicate with the ECU (Engine Control Unit), which is not illustrated. For example, the telecommunication means 4a and 4b may be radio devices. Similarly, the telecommunication means 4a and 4b can be a wired network.

The first vehicle 2 also comprises acquisition means 5 being configured to acquire visual and operating information from the first vehicle 2. For example, acquisition means 5 may comprise at least one of the following means: video cameras (front and rear cameras for day and night vision), distance sensors, or operating sensors for the vehicle.

The first vehicle 2 also comprises remote driving means 6a of a known type, configured to drive the vehicle based on the information received by the communication means 4a.

The second vehicle 3 comprises remote driving means 6b. The second vehicle may also include acquisition means (not shown) configured to detect the movement of the first vehicle 2.

The second vehicle 3 also comprises viewing means 7, for example a screen, configured to display the visual or operating information of the first vehicle 2.

The second vehicle 3 finally comprises manual driving means (not shown) that, if activated by the driver, have priority over the remote driving means 6b, according to the applicable rules.

Both the first vehicle 2 and the second vehicle 3 may also comprise safety means (not shown) configured to stop both vehicles 2 and 3 if one of the acquisition means, viewing means or communication means is faulty.

The operation of system 1 is as follows.

The first vehicle 2 is manually driven remotely by driver 8 who is located in the second vehicle 3, by a signal from communication means 4a and 4b.

The driver 8 can manually drive the first vehicle 2, based on the visual and operational information of the first vehicle 2, that he can see via the viewing means 7.

The second vehicle 3 is driven automatically by the remote driving means 6b. The remote driving means 6b are controlled by a signal, which can come from the ECU of the second vehicle 3, based on the operation of the first vehicle 2 or, alternatively, based on the information acquired by the acquisition means (not shown) installed on the second vehicle 3 and configured to acquire information on the movement of the first vehicle 2.

If any one of the acquisition means 5, viewing means 7 or communication means 4a or 4b is faulty, the safety means can stop both vehicles 2 and 3.

For example, the remote driving means 6b can drive the second vehicle 3 based on the movements of the first vehicle 2 according to any one of the following options:
- the second vehicle 3 is controlled by remote driving means 6b with a time offset relative to the remote the driving means 6a of the first vehicle 2;
- the second vehicle 3 is controlled by the remote driving means 6b based on processing the information acquired by the acquisition means (not shown) on the movement of the first vehicle 2;
- in the case of an emergency, the second vehicle 3 is controlled by the remote driving means 6b, with a very short time offset with respect to the remote driving means 6a of the first vehicle 2; or
- in the case of precision manoeuvres (e.g. parking, coupling or uncoupling), the second vehicle 3 is controlled by the remote driving means 6b with a very long time offset with respect to the remote driving means 6a of the first vehicle 2.

The advantages of an automatic driving system according to the present invention are obvious from the above.

The system 1 allows driving vehicles with only one driver 8, positioned one behind the other, one of the two vehicles being driven automatically, in accordance with current standards.

Finally, it is clear that system 1 according to the present invention may be subject to modifications and variants which, however, do not fall outside the scope of protection defined by the claims.

For example, the viewing means 7, acquisition means 5 or communication means 4a and 4b could include other devices without changing their functions.

The two coupled vehicles according to system 1 may be buses, agricultural vehicles, or industrial vehicles.

## Claims

1. A driving system (1) for two vehicles positioned one behind the other, said driving system (1) comprises a first vehicle (2) and a second vehicle (3), the two vehicles (2,3) comprise communication means (4a,4b) and the first vehicle (2) comprises remote driving means (6a) as well as acquisition means (5) configured to acquire visual and operating information of the first vehicle (2), this information is sent by the communication means (4a, 4b) to the second vehicle (3), the latter comprises viewing means (7) configured to view said information, a driver (8) being positioned in the second vehicle (3) and being able to control the remote driving means (6a, 6b) of the first vehicle (2) as a result of said information,
**characterized in that** the second vehicle (3) is adapted to follow the first vehicle (2) and **in that** the second vehicle (3) comprises remote driving means (6b), the second vehicle (3) being driven automatically based on the movements of the first vehicle (2).

2. The system according to claim 1, **characterised in that** the communication means (4a, 4b) comprise radio devices or a wired network.

3. The system according to claims 1 or 2, **characterised in that** the acquisition means (5) comprise at least one of the following means: video cameras, distance sensors or operation sensors of the vehicle (2).

4. The system according to one of the preceding claims, **characterised in that** the viewing means (7) comprise at least one monitor configured to view the information acquired by the acquisition means (5).

5. The system according to one of the preceding claims, **characterised in that** the second vehicle (3) comprises manual driving means which, if activated, take priority over the automatic driving of the second vehicle.

6. The system according to one of the preceding claims, **characterised in that** the two vehicles comprise safety means configured to stop the two vehicles (2, 3) if one of the acquisition means (5), the viewing means (7), the remote driving means (6a, 6b) or the communication means (4a, 4b) is faulty.

7. The system according to one of claims 1 to 6, **characterised in that** said automatic driving based on the movements of the first vehicle (2) is implemented as a result of a time offset between the first vehicle and the second vehicle.

## Patentansprüche

1. Ein Fahrsystem (1) für zwei Fahrzeuge, die hintereinander angeordnet sind, wobei das Fahrsystem (1) ein erstes Fahrzeug (2) und ein zweites Fahrzeug (3) umfasst, die zwei Fahrzeuge (2, 3) Kommunikationsmittel (4a, 4b) umfassen und das erste Fahrzeug (2) Fernsteuerungsmittel (6a) sowie Erfassungsmittel (5) umfasst, ausgeführt, um visuelle Informationen und Betriebsinformationen des ersten Fahrzeugs (2) zu erfassen, welche Informationen durch die Kommunikationsmittel (4a, 4b) an das zweite Fahrzeug (3) gesendet werden, welches Betrachtungsmittel (7) umfasst, die ausgeführt sind, um die Informationen zu betrachten, wobei ein Fahrer (8) im zweiten Fahrzeug (3) angeordnet ist und in der Lage ist, die Fernsteuerungsmittel (6a, 6b) des ersten Fahrzeugs (2) aufgrund der Informationen zu steuern,
**dadurch gekennzeichnet, dass** das zweite Fahrzeug (3) ausgeführt ist, um dem ersten Fahrzeug (2) zu folgen und dass das zweite Fahrzeug (3) Fernsteuerungsmittel (6b) umfasst, wobei das zweite Fahrzeug (3) basierend auf den Bewegungen des ersten Fahrzeugs (2) automatisch gesteuert wird.

2. System nach Anspruch 1, **dadurch gekennzeichnet, dass** die Kommunikationsmittel (4a, 4b) Funkgeräte oder ein kabelgebundenes Netzwerk umfassen.

3. System nach Anspruch 1 oder 2, **dadurch gekennzeichnet, dass** die Erfassungsmittel (5) mindestens eines der folgenden Mittel umfassen: Videokameras, Abstandssensoren oder Betriebssensoren des Fahrzeugs (2).

4. System nach einem der vorstehenden Ansprüche, **dadurch gekennzeichnet, dass** die Betrachtungsmittel (7) mindestens einen Bildschirm umfassen, der ausgeführt ist, um die durch die Erfassungsmittel (5) erfassten Informationen zu betrachten.

5. System nach einem der vorstehenden Ansprüche, **dadurch gekennzeichnet, dass** das zweite Fahrzeug (3) manuelle Steuerungsmittel umfasst, die, falls aktiviert, Vorrang vor der automatischen Steuerung des zweiten Fahrzeugs haben.

6. Fahrzeug nach einem der vorstehenden Ansprüche, **dadurch gekennzeichnet, dass** die zwei Fahrzeuge Sicherheitsmittel umfassen, die ausgeführt sind, um beide Fahrzeuge (2, 3) anzuhalten, falls eines der Erfassungsmittel (5), der Betrachtungsmittel (7), der Fernsteuerungsmittel (6a, 6b) oder der Kommunikationsmittel (4a, 4b) defekt ist.

7. System nach einem der Ansprüche 1 bis 6, **dadurch gekennzeichnet, dass** das automatische Steuern basierend auf den Bewegungen des ersten Fahrzeugs (2) als Ergebnis eines Zeitversatzes zwischen dem ersten und dem zweiten Fahrzeug implementiert wird.

## Revendications

1. Système de conduite (1) pour deux véhicules positionnés l'un derrière l'autre, ledit système de conduite (1) comprend un premier véhicule (2) et un deuxième véhicule (3), les deux véhicules (2, 3) comprennent des moyens de communication (4a, 4b) et le premier véhicule (2) comprend des moyens de conduite à distance (6a) ainsi que des moyens d'acquisition (5) configurés pour acquérir une information visuelle et de fonctionnement du premier véhicule (2), cette information est envoyée par les moyens de communication (4a, 4b) au deuxième véhicule (3), ce dernier comprend des moyens de visualisation (7) configurés pour visualiser ladite information, un conducteur (8) étant positionné dans le deuxième véhicule (3) et étant apte à commander les moyens de conduite à distance (6a, 6b) du premier véhicule (2) en conséquence de ladite information, **caractérisé en ce que** le deuxième véhicule (3) est adapté à suivre le premier véhicule (2) et **en ce que** le deuxième véhicule (3) comprend des moyens de conduite à distance (6b), le deuxième véhicule (3) étant conduit de manière automatique sur la base des mouvements du premier véhicule (2).

2. Système selon la revendication 1, **caractérisé en ce que** les moyens de communication (4a, 4b) comprennent des dispositifs radio ou un réseau filaire.

3. Système selon les revendications 1 ou 2, **caractérisé en ce que** les moyens d'acquisition (5) comprennent au moins un des moyens suivants : des caméras vidéo, des capteurs de distance ou des capteurs de fonctionnement du véhicule (2).

4. Système selon l'une quelconque des revendications précédentes, **caractérisé en ce que** les moyens de visualisation (7) comprennent au moins un écran configuré pour visualiser l'information acquise par les moyens d'acquisition (5).

5. Système selon l'une quelconque des revendications précédentes, **caractérisé en ce que** le deuxième véhicule (3) comprend des moyens de conduite manuelle qui, s'ils sont activés, ont la priorité sur la conduite automatique du deuxième véhicule.

6. Système selon l'une quelconque des revendications précédentes, **caractérisé en ce que** les deux véhicules comprennent des moyens de sécurité configurés pour arrêter les deux véhicules (2, 3) si l'un des moyens d'acquisition (5), des moyens de visualisation (7), des moyens de conduite à distance (6a, 6b) ou des moyens de communication (4a, 4b) est défaillant.

7. Système selon l'une quelconque des revendications 1 à 6, **caractérisé en ce que** ladite conduite automatique basée sur les mouvements du premier véhicule (2) est mise en œuvre en conséquence d'un décalage temporel entre le premier véhicule et le deuxième véhicule.
